# FASCICULE DE BREVET EUROPEEN

(11) **EP 1 387 592 B1**
(45) Date de publication et mention de la délivrance du brevet: **22.09.2010**
(21) Numéro de dépôt: 03291692.6
(22) Date de dépôt: 08.07.2003
(51) Int. Cl.: H04W 92/12, H04B 7/185

(54) **Dispositif de prise de controle de ressources dans un réseau de communications, pour l'insertion de trafic**
Vorrichtung zur Steuerung von Ressourcen in einem Kommunikationssystem zur Verkehrseinfügung
Apparatus for controlling resources in a communications system for the insertion of traffic

(30) Priorité: 01.08.2002 FR 0209819
(43) Date de publication de la demande: 04.02.2004
(73) Titulaire: Alcatel Lucent, 75008 Paris (FR)
(72) Inventeur: Martin, Béatrice, 75005 Paris (FR); Couet, Jacques, 95630 Meriel (FR)
(74) Mandataire: Hedarchet, Stéphane

(56) Documents cités:
- ETSI: "Universal Mobile Telecommunications System (UMTS); UTRAN Iub Interface: General Aspects and Principles (3GPP TS 25.430 version 5.1.0 Release 5)" ETSI TS 125 430 V5.1.0 (2002-06), juin 2002 (2002-06), pages 1-26, XP002237600 France
- ETSI: "Universal Mobile Telecommunications System (UMTS); UTRAN Iub/Iur Interface User PLane Protocol for DCH Data Streams (3GPP TS 25.427 version 4.2.0 Release 4)" ETSI TS 125 427 V4.2.0 (2001-09), septembre 2001 (2001-09), pages 1-33, XP002237601 France
- DELLI PRISCOLI F: "UMTS ARCHITECTURE FOR INTEGRATING TERRESTRIAL AND SATELLITE SYSTEMS" IEEE MULTIMEDIA, IEEE COMPUTER SOCIETY, US, vol. 6, no. 4, octobre 1999 (1999-10), pages 38-45, XP000880603 ISSN: 1070-986X
- OBRADOVIC V: "EVOLUTION PHASES INTEGRATING SATELLITE AND TERRESTRIAL NETWORKS IN THE CONFIGURATION OF S-UMTS" 1999 IEEE 49TH. VEHICULAR TECHNOLOGY CONFERENCE. HOUSTON, TX, MAY 16 - 20, 1999, IEEE VEHICULAR TECHNOLOGY CONFERENCE, NEW YORK, NY: IEEE, US, vol. 2 CONF. 49, 16 mai 1999 (1999-05-16), pages 1375-1379, XP000903270 ISBN: 0-7803-5566-0

## Description

L'invention concerne le domaine des communications entre terminaux au sein d'un réseau, et plus particulièrement le contrôle des ressources, de tout type (radio, optique, mécanique (notamment acoustique) ou électrique (analogique)), offertes par des stations de base d'un réseau.

On entend ici par « terminal », tout équipement de réseau, et notamment les équipements d'utilisateurs, tels que les ordinateurs fixes ou portables ou les téléphones portables, ou les serveurs.

Comme le sait l'homme de l'art, un réseau (ou une installation) de communications comporte généralement un coeur de réseau (ou « Core Network » (CN)) couplé à un ou plusieurs noeuds, couplés chacun, via une interface, à une ou plusieurs stations de base d'émission/réception, associées chacune à une ou plusieurs cellules couvrant chacune une zone, par exemple radio, et dans laquelle peuvent se trouver un ou plusieurs équipements d'utilisateurs, tels que des téléphones mobiles. Ces noeuds sont appelés BSC (pour « Base Station Controller »), dans le cas des réseaux dits « 2G » ou « 2,5G » tels que ceux de type GSM ou GPRS, ou RNC (pour « Radio Network Controller »), dans le cas des réseaux dits « 3G» tels que ceux de type UMTS. Par ailleurs, les stations de base sont appelées BTS dans le cas d'un réseau de type GSM (ou GPRS) et Node-B dans le cas d'un réseau UMTS.

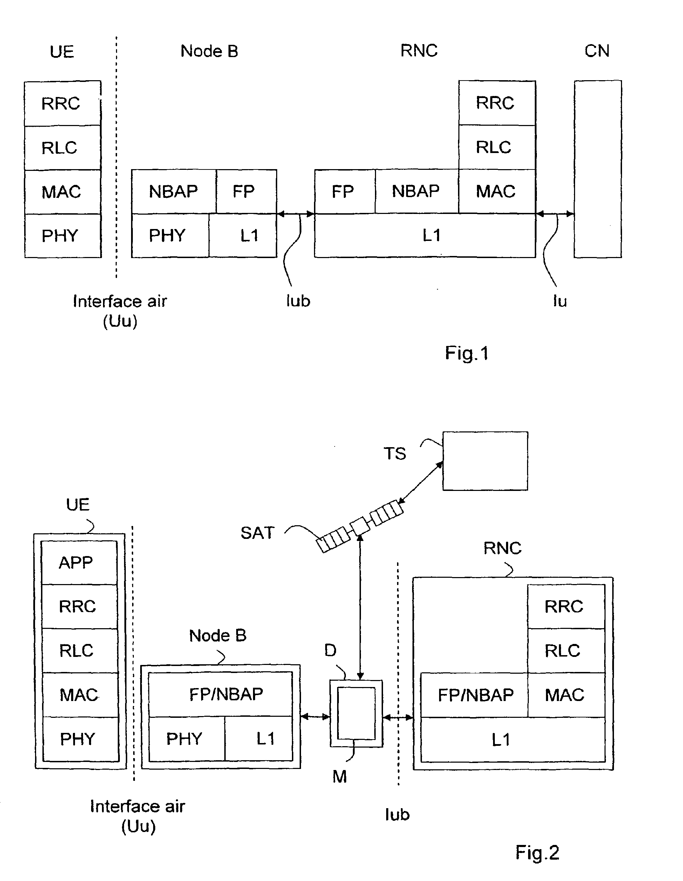

Dans les réseaux UMTS, par exemple, le contrôle des Node Bs, et notamment la gestion de leurs ressources radio, et le contrôle du transfert terrestre du trafic entre le Core Network et les Node Bs, sont assurés par les RNCs via l'interface, appelée lub. Plus précisément, et de façon schématique, l'interface lub est constituée d'une pile de protocoles répartie dans différents éléments du réseau (RNCs et Node Bs), comme illustré sur la figure 1.

Pour ce qui concerne la partie trame à émettre sur l'interface radio, appelée Uu, la partie de pile de protocoles gérant l'lub implémentée dans un Node B comprend un module FP (pour « Frame Protocol ») chargé de plusieurs fonctionnalités, et notamment du transport des blocs de transport sur l'interface lub (c'est-à-dire les blocs de trames radio qui sont ensuite émis ou reçus par le modem radio (ou couche physique PHY) du Node B), du transport des informations de contrôle de puissance (ou « outer loop ») du RNC vers le Node B, du support des mécanismes de synchronisation des canaux de transport, du support des mécanismes de synchronisation du Node B, et du transfert de paramètres de l'interface radio du RNC vers le Node B.

Pour ce qui concerne le contrôle des communications avec les terminaux sur l'interface Uu, la partie de pile de protocoles implémentée dans un Node B comprend deux sous-ensembles.

Un premier sous-ensemble gère le BCCH (« Broadcast Control Channel »). Pour ce faire, une partie des couches 2 et 3 de l'interface radio est implémentée dans le Node B. Il s'agit, notamment, des RRC-b (« Radio Resource Control »), RLC-b (« Radio Link Control ») et MAC-b (« Medium Access Control »). Grâce à ces derniers, le Node B peut, d'une première part, insérer dans les blocs système du BCCH les informations relatives à certains paramètres radio des cellules qu'il gère (fonction RRC-b), d'une deuxième part, segmenter les blocs d'information système en blocs de transport (fonction RLC-b), et d'une troisième part, réaliser le cadencement (ou « scheduling ») du canal BCCH (fonction MAC-b).

Un second sous-ensemble gère le Node B. Il comprend le protocole NBAP (« Node B Application Part ») chargé de plusieurs fonctionnalités, et notamment de la gestion de la configuration des cellules, laquelle permet au RNC de gérer les informations de configuration des cellules sous le contrôle du Node B, de la gestion des canaux de transport communs, laquelle permet au RNC de configurer lesdits canaux, de la gestion des événements « ressource », laquelle permet au Node B d'informer le RNC sur l'état de ses ressources radio, et de l'alignement de la configuration, laquelle permet au RNC et au Node B de vérifier qu'ils possèdent les mêmes informations de configuration des ressources radio, et éventuellement de coordonner ces informations.

En fonctionnement standard, c'est-à-dire lorsque les données sont échangées entre le Core Network et les équipements d'utilisateurs, ces réseaux sont tout à fait satisfaisants. En revanche, lorsque l'on souhaite raccorder à ce type de réseau une autre source de trafic que celles que constituent déjà les équipements d'utilisateurs et le Core Network, par exemple via une liaison satellite, ne serait-ce que momentanément, cela doit s'effectuer au niveau de l'interface (lub) entre le noeud (RNC) et la ou les stations de base (Node B) concernées. Cela pose un certain nombre de problèmes. Des problèmes similaires surviennent lorsque l'on souhaite transférer directement le trafic vers une station de base (Node B) et depuis un Core Network, sans passer par le RNC, ne serait-ce que momentanément, ou lorsque l'on souhaite utiliser un lien satellite, par exemple, plutôt que le lien terrestre classique, pour transmettre le trafic (on parle alors de « backhauling par satellite »). L'article de D. Priscoli : « UMTS architecture for integrating terrestrial and satellite systems » IEEE Computer society décrit une technique pour la transmission du trafic d'une source de trafic externe via une liaison satellite, à une station de base terrestre d'un réseau de type UMTS.

Parmi ces problèmes, on peut notamment citer l'augmentation du délai de transmission vers la station de base (Node B) qui perturbe sérieusement les algorithmes de gestion des ressources, par exemple radio, (allocation de codes, contrôle de puissance, « handover », et analogue) et qui se traduit par une baisse de la qualité de service. Ce problème est plus particulièrement gênant dans le cas du backhauling par satellite.

On peut également citer le problème du contrôle des ressources, par exemple radio, de la station de base (Node B), de la programmation de la couche physique (PHY) et de la protection dite de niveau 2, qui sont des fonctionnalités situées dans le noeud (RNC) et dont le protocole associé transite par l'interface (lub). L'insertion d'une nouvelle source de trafic, par exemple via un lien stellite, devrait nécessiter l'implantation dans ce lien satellite des fonctionnalités de l'interface (lub), ce qui reviendrait à coupler la ou les stations de base (Node B) à une interface supplémentaire. Or, l'architecture, dite UTRAN (pour « Universal Terrestrial Radio interface Network »), ne permet une gestion des Node Bs que par une unique interface lub, pour la partie contrôlée par le RNC.

On peut encore citer le problème du contrôle de la synchronisation de l'horloge de référence des canaux sous contrôle des stations de base (Node B). Ce problème est plus particulièrement gênant lorsque les stations de base sont utilisées en tant que répéteurs terrestres, par exemple au sein d'une installation de diffusion de données, notamment par satellite. En effet, dans ce type d'installation le satellite transmet un même trafic selon des première f_{MSS} et seconde f_{FSS} fréquences respectivement à des équipements d'utilisateurs (UE) situés dans les cellules gérées par les stations de base (Node Bs) et auxdites stations de base, lesquelles répètent ledit trafic reçu vers les équipements d'utilisateurs concernés, sur la fréquence f_{MSS}. ll en résulte que les équipements d'utilisateurs peuvent recevoir deux fois le même trafic sur la même fréquence f_{MSS}, mais de façon décalée dans le temps, ce qui génère des conflits.

L'invention a donc pour but de remédier à tout ou partie des inconvénients précités.

Elle propose à cet effet un dispositif de gestion de données destiné à être implanté dans un réseau (ou une installation) de communications du type de celle présentée dans l'introduction, c'est-à-dire comportant au moins une station de base, disposant de ressources (quel qu'en soit le type, par exemple radio, optique ou acoustique), et au moins un noeud terrestre, raccordé à un coeur de réseau et à la station de base de manière à contrôler ses ressources via une interface (par exemple de type lub).

Ce dispositif se caractérise par le fait qu'il comporte des moyens de contrôle susceptibles d'être couplés à une source de trafic ainsi qu'à l'interface lub, et capable de prendre localement, sur ordre (par exemple du gestionnaire de la source radio ou du gestionnaire de la source de trafic) le contrôle de tout ou partie des ressources d'une ou plusieurs stations de base, à la place du noeud auquel elle est couplée, de manière à permettre une transmission de trafic (ou transfert de données) entre la source de trafic et la station de base.

De la sorte, il est possible de réserver momentanément tout ou partie des ressources de l'une au moins des stations de base, pour transmettre le trafic de la source de trafic, en interdisant (ou bloquant) leur utilisation par le noeud. Cette intervention s'effectuant au niveau de l'interface noeud(s) / station(s) de base, elle est donc transparente au(x) noeud(s), au(x) station(s) de base, ainsi qu'aux protocoles transitant sur l'interface.

Préférentiellement, les moyens de contrôle du dispositif comportent une partie au moins de la pile des protocoles (ou l'équivalent fonctionnel) qui sont dédiés à la gestion des ressources des stations de base concernées, et plus précisément ceux qui assurent les fonctionnalités suivantes :
- gestion de la configuration d'une partie au moins d'une ou plusieurs cellules gérées par l'une des stations de base, et des ressources associées,
- contrôle d'une partie au moins de la configuration des canaux de transport de données qui sont gérés par la ou les stations de base,
- gestion des événements « ressource » générés par la ou les stations de base et représentatifs de l'état de leurs ressources, et
- vérification de l'identité des informations de configuration qui sont détenues par la station de base et le noeud.

Egalement de préférence, les moyens de contrôle du dispositif comportent une partie au moins de la pile des protocoles dédiés à la gestion de la synchronisation de l'horloge de référence des canaux sous contrôle de la ou des stations de base.

Dans les modes de réalisation mentionnés ci-dessus, il est préférable que les parties de pile de protocoles dédiés à la gestion des ressources, ici de type radio, et à la synchronisation soient choisies parmi une partie au moins du protocole NBAP, une partie au moins du protocole RRC, une partie au moins du protocole FP, une partie au moins du protocole RLC, une partie au moins du protocole MAC, une partie au moins du protocole PDCP, et une partie au moins du protocole BMC. Dans ce cas, on duplique dans le dispositif les parties des protocoles précités qui sont implantées dans les noeuds.

Avantageusement, les moyens de contrôle du dispositif comprennent également un module de filtrage destiné à filtrer l'intégralité du trafic issu de la source de trafic et du trafic (terrestre) issu du noeud (RNC). Ils comportent également, de préférence, un module de génération de messages capable d'adresser au noeud (RNC) un message lui signalant que des ressources ont été bloquées.

Avantageusement, la prise de contrôle de ressources locales par les moyens de contrôle s'effectue en trois phases. Une première phase est initiée (de préférence par le module de filtrage) à réception d'une requête de transmission de trafic destiné à un ou plusieurs équipements d'utilisateurs situés dans une ou plusieurs cellules gérées par une ou plusieurs station de base, et issue de la source de trafic. Elle provoque l'envoi à chaque station de base concernée d'une requête de réservation de ressources. Une seconde phase est initiée par l'émission d'un message de réponse par chaque station de base interrogée, à destination des moyens de contrôle. A réception du ou des messages, indiquant les disponibilités des ressources des stations de base, les moyens de contrôle adressent au(x) noeud(s) au(x)quel(s) est (sont) couplé(s) la ou les stations de base, un message lui (leur) signalant que les ressources disponibles sont bloquées. Une troisième phase est initiée par la transmission du trafic de la source de trafic. En fin de transmission, les moyens de contrôle adressent (de préférence grâce à leur module de génération de messages) un premier message à chaque station de base pour libérer ses ressources utilisées et un second message au noeud pour lui signaler que ces ressources sont débloquées, et qu'il peut de nouveau en disposer.

Avantageusement, les moyens de contrôle du dispositif comprennent également un module d'adaptation de la synchronisation capable de prendre en compte les divergences de délais de transmission des trafics issus de la source de trafic et du noeud (terrestre).

Par ailleurs, lorsque l'installation comporte des moyens permettant de transmettre par voie d'ondes, sur des première et seconde fréquences, des données issues de la source de trafic, respectivement à des équipements d'utilisateurs, situés dans une ou plusieurs cellules gérées par une ou plusieurs stations de base, et à ces stations de base, les moyens de contrôle sont préférentiellement capables (de préférence grâce à leur module de synchronisation) de calculer un écart (ou délai) de transmission représentatif de la différence temporelle des durées de transmission des données sur les première et seconde fréquences, puis de retarder la transmission des données destinées à la station de base (Node B) d'une valeur sensiblement égale à l'écart calculé.

Les moyens de contrôle du dispositif peuvent être implantés dans un boîtier muni d'une interface de connexion permettant leur raccordement aux stations de base, ou à un terminal, par exemple satellite, couplé à une station de base et à un satellite alimenté par la source de trafic. Dans ce cas, le dispositif est de type « plug and play ». Mais, en variante, le dispositif selon l'invention peut être directement implanté dans chaque station de base, ou dans un terminal satellite couplé à une station de base et à un satellite alimenté par la source de trafic.

L'invention porte également sur une installation de communications comportant au moins une station de base, disposant de ressources (quel qu'en soit le type, par exemple radio, optique, mécanique (notamment acoustique) ou électrique (analogique), au moins un noeud terrestre, raccordé à un coeur de réseau et à la station de base de manière à contrôler ses ressources via une interface (par exemple de type lub), ainsi qu'un dispositif du type de celui présenté ci-avant.

Avantageusement, l'installation selon l'invention peut comporter un réseau d'accès satellitaire se présentant, par exemple, sous l'une des formes suivantes :
- au moins un serveur de satellite raccordé à au moins un noeud couplé au coeur de réseau, au moins un terminal de satellite raccordé à l'une des stations de base, et au moins un satellite de communications pouvant échanger des données par voie d'ondes avec le serveur de satellite et avec chaque terminal de satellite. Dans ce cas, le coeur de réseau et le noeud constituent la source de trafic ;
- au moins un serveur de satellite raccordé à une source de trafic, au moins un terminal de satellite raccordé à l'une des stations de base et à au moins un noeud couplé au coeur de réseau, et au moins un satellite de communications pouvant échanger des données par voie d'ondes avec le serveur de satellite et avec chaque terminal de satellite ;
- au moins un serveur de satellite raccordé à un noeud satellitaire, lui-même raccordé à un second coeur de réseau et constituant avec celui-ci la source de trafic, au moins un terminal de satellite raccordé à l'une au moins des stations de base et au noeud couplé au premier coeur de réseau, et au moins un satellite de communications pouvant échanger des données par voie d'ondes avec le serveur de satellite, avec chaque terminal de satellite et avec des équipements d'utilisateurs, eux-mêmes agencés de manière à échanger des données avec les stations de base, via les ressources.

Mais en variante, la source de trafic peut être terrestre, et d'une manière générale l'invention concerne toutes les situations dans lesquelles plusieurs portions d'une ou plusieurs installations présentent des délais de transmission assez divergents. Ainsi, la source de trafic peut être constituée d'une ligne de transmission couplée à un routeur ralentissant le trafic.

L'invention trouve une application particulièrement intéressante dans les réseaux de communications de type UMTS (ou 3G), chaque noeud étant alors constitué d'un contrôleur de réseau radio (RNC) et chaque station de base étant constituée d'un Node B.

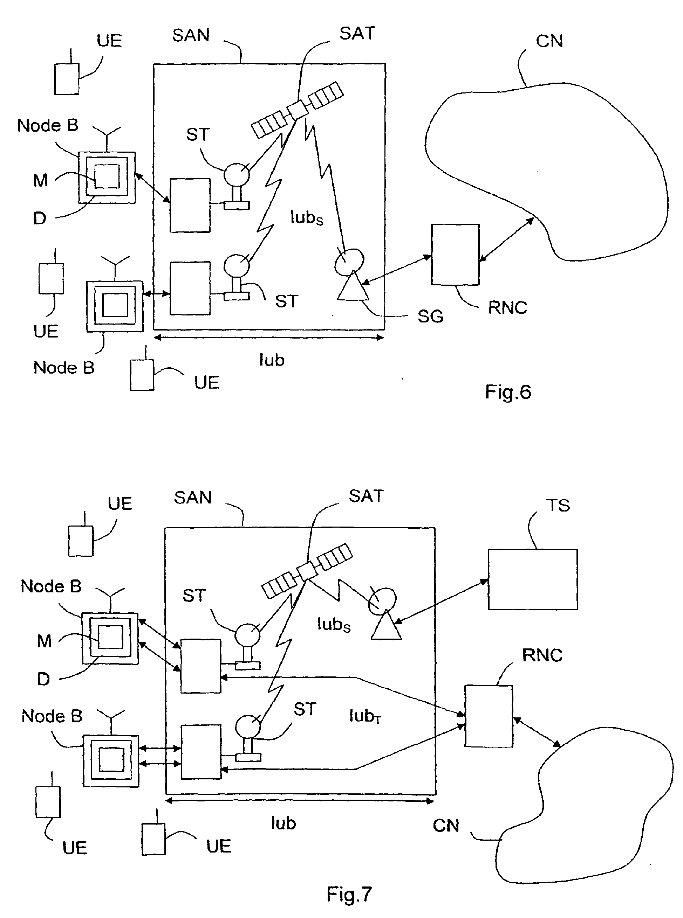

D'autres caractéristiques et avantages de l'invention apparaîtront à l'examen de la description détaillée ci-après, et des dessins annexés, sur lesquels :
- la figure 1 illustre de façon schématique l'agencement des principales fonctionnalités impliquées dans la gestion des ressources radio et du transfert de trafic dans un réseau de type UMTS,
- la figure 2 illustre de façon schématique l'agencement des principales fonctionnalités impliquées dans la gestion des ressources radio dans un réseau de type UMTS équipé d'un dispositif selon l'invention couplé à une source de trafic,
- la figure 3 illustre de façon schématique la partie de la pile de protocoles impliqués dans la gestion et la configuration du Node B par le dispositif selon l'invention,
- la figure 4 illustre de façon schématique la partie de la pile de protocoles impliqués dans le transfert de la signalisation entre la source de trafic et un équipement d'utilisateur, via le dispositif selon l'invention,
- la figure 5 illustre de façon schématique la partie de la pile de protocoles impliqués dans la transmission du trafic utilisateur, via le dispositif selon l'invention,
- la figure 6 illustre de façon schématique une partie d'une première installation de communications selon l'invention,
- la figure 7 illustre de façon schématique une partie d'une deuxième installation de communications selon l'invention, et
- la figure 8 illustre de façon schématique une partie d'une troisième installation de communications selon l'invention.
   Les dessins annexés pourront non seulement servir à compléter l'invention, mais aussi contribuer à sa définition, le cas échéant.
   On se réfère tout d'abord aux figures 1 et 2 pour présenter l'invention.
   Le dispositif D selon l'invention est destiné à être installé dans une installation de communications comportant au moins un réseau de communications, de préférence de type UMTS (3G).
   Comme indiqué dans la partie introductive, et comme illustré sur l'une ou l'autre des figures 6 à 8, sur lesquelles on reviendra plus loin, un réseau UMTS peut, d'une façon très schématique mais néanmoins suffisante à la compréhension de l'invention, être résumé à un coeur de réseau (ou « Core Network » (CN)) couplé à un réseau d'accès comportant
- plusieurs noeuds, appelés RNCs (pour « Radio Network Controllers »), couplés au Core Network CN, via une interface, appelée lu, et
- plusieurs stations de base d'émission/réception, appelées Node Bs, et d'une part, associées chacune à une ou plusieurs cellules couvrant chacune une zone radio et dans laquelle peuvent se trouver un ou plusieurs équipements d'utilisateurs UE, tels que des téléphones mobiles, et d'autre part couplés seuls ou par groupe d'au moins deux à l'un des RNCs, via une interface logique, appelée lub, généralement terrestre. Cette interface luB peut être constituée, par exemple, de liaisons filaires ou LDMS (radio fixe) présentant différents types de délai de transmission.

Comme illustré sur les figures 1 et 2 et comme présenté dans la partie introductive, ces différents éléments assurent différentes fonctionnalités, bien connues de l'homme de l'art, grâce à des piles de protocoles réparties. Le dispositif D selon l'invention étant destiné à prendre le contrôle d'une partie au moins des ressources radio de l'un au moins des Node Bs, à la place du RNC auquel ce Node B est couplé via l'interface lub, on ne rappellera ci-après que les protocoles impliqués dans la gestion des ressources radio des Node Bs :
- un module (ou couche) RRC (pour « Radio Resource Control »), qui gère la connexion de signalisation utilisée, notamment, lors de l'établissement et de l'arrêt d'une communication entre l'équipement d'utilisateur UE et le Node B. Par exemple, ce module RRC est chargé d'insérer dans les blocs système du canal BCCH (pour « Broadcast Control Channel ») les informations relatives à certains paramètres radio de la cellule,
- un module (ou couche) RLC (pour « Radio Link Control »), qui gère le transport des données entre deux équipements du réseau, et notamment segmente les blocs d'information système en blocs de transport,
- un module (ou couche) MAC (pour « Medium Access Control »), qui assure la fonction de multiplexage des données sur les différents canaux de transport gérés par les Node Bs, ou en d'autres termes réalise le cadencement (ou « scheduling ») des différents canaux, dont le canal BCCH,
- un module (ou couche) PDCP (pour « Packet Data Convergence Protocol »), qui gère l'indépendance des protocoles radio de l'UTRAN, et notamment des couches RLC et MAC, par rapport aux protocoles de transport de données réseau, et assure la compression de données ou d'en-tête de paquets de données,
- un module (ou couche) BMC (pour « Broadcast/Multicast Control»), qui gère la diffusion de données de tout type, y compris les données multimédia, au niveau de l'interface radio,
- un module (ou couche) PHY (pour « Physique »), également appelé modem, qui constitue la couche physique de l'interface radio et assure les fonctions de codage, d'entrelacement et de modulation,
- un module (ou couche) FP (pour « Frame Protocol »), qui gère, notamment, le transport des blocs de transport sur l'interface lub, le transport des informations de contrôle de puissance du RNC vers le Node B, le support des mécanismes de synchronisation des canaux de transport, le support des mécanismes de synchronisation du Node B, et le transfert de paramètres de l'interface radio du RNC vers le Node B,
- un module (ou couche) NBAP (pour « Node B Application Part »), qui gère, notamment, la configuration des cellules contrôlées par le Node B, les canaux de transport communs, les événements « ressource » permettant au Node B d'informer le RNC sur l'état de ses ressources radio, et l'alignement de la configuration qui permet au RNC et au Node B de vérifier qu'ils possèdent les mêmes informations de configuration des ressources radio, et éventuellement de coordonner ces informations.

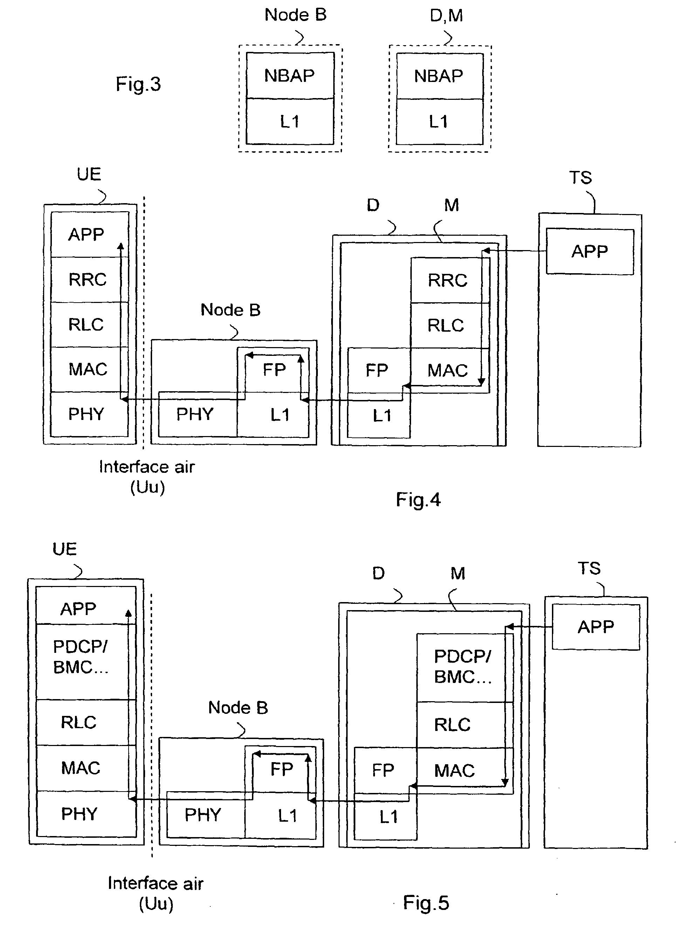

Les couches PDCP/BMC, RRC, RLC et MAC sont réparties dans les équipements d'utilisateurs UE et dans les RNCs (figure 5). La couche PHY est répartie dans les équipements d'utilisateurs UE et dans les Node Bs. Les couches FP et NBAP sont réparties dans les Node Bs et les RNCs, qui comportent en outre une couche L1, qui lie le Node B au RNC (il s'agit par exemple de liaison(s) filaire(s) ou radio (LDMS).

Comme illustré sur les figures 2 à 5, le dispositif D selon l'invention comporte un module de contrôle M agencé de manière à prendre localement, et de préférence momentanément et sur ordre, le contrôle de tout ou partie des ressources radio d'un ou plusieurs Node Bs à la place du RNC auquel ces Node B sont couplés. Une telle prise de contrôle est destinée à permettre la transmission d'un trafic issu d'une source de trafic, quelle qu'en soit l'origine. Bien entendu, une telle prise de contrôle ne peut se faire qu'avec l'autorisation de l'opérateur du réseau « principal » ou de l'installation.

Le module de contrôle M peut être réalisé sous la forme de circuits électroniques, de modules logiciels (ou informatiques), ou d'une combinaison de circuits et de logiciels.

Comme cela est illustré sur la figure 2, la source de trafic TS peut être externe au Core Network CN, raccordé aux RNCs. Mais, comme on le verra plus loin en référence à la figure 6, cette source de trafic peut être le Core Network CN lui-même. Cette dernière situation peut être particulièrement intéressante lorsque, notamment, on ne peut plus, ou on ne veut plus, utiliser les liens terrestres pour établir la liaison entre les RNCs et les Node Bs.

Dans l'exemple illustré sur la figure 2, la source de trafic TS est couplée au dispositif D via une liaison satellite SAT. Ce dispositif D comporte, dans cet exemple, un boîtier équipé du module de contrôle M et muni d'une interface de connexion (non représentée) permettant son couplage à un Node B et à l'interface lub entre le Node B et le RNC correspondant. Le dispositif D se trouve donc intercalé entre le Node B et l'interface lub, de façon transparente non seulement aux Node B et RNC, mais également aux protocoles qui transitent par l'interface lub.

Dans ce mode de réalisation du dispositif D, de type « plug and play », il est nécessaire de prévoir un dispositif D pour chaque Node B dont le contrôle des ressources radio locales doit pouvoir être pris de façon momentanée et sur ordre. Bien entendu, d'autres modes de réalisation du dispositif D peuvent être envisagés, comme on le verra plus loin en référence aux figures 6 à 8.

Afin de pouvoir prendre le contrôle des ressources locales, ici de type radio, du Node B auquel il est couplé, le dispositif D, et plus précisément son module de contrôle M, comporte plusieurs modules spécifiques, qui seront décrits plus loin, et la partie de la pile de protocoles (ou couches), standardisés au 3GPP (dans le cas d'un réseau UMTS), implantée dans le RNC et dédiée audit contrôle. De façon plus détaillée, il comporte, d'une première part, la partie de la couche NBAP dédiée à la gestion et à la configuration du Node B (voir figure 3), d'une deuxième part, la partie des couches FP, RRC, RLC et MAC dédiée au transfert de la signalisation, et d'une troisième part, la partie des couches PDCP/BMC, RLC, MAC et FP dédiée au transfert du trafic entre la source de trafic ST et un équipement d'utilisateur UE.

Un premier module spécifique est destiné à filtrer, d'une part, le trafic qui provient de la source de trafic ST, et d'autre part, le trafic, ici terrestre, qui provient du RNC. Grâce à ce module de filtrage, le dispositif D peut détecter que la source de trafic ST souhaite transmettre du trafic via le Node B auquel il est couplé, et peut alors agir en conséquence en lançant une procédure de requête de réservation de ressources.

Un deuxième module spécifique est destiné à générer des messages signalant au RNC que des ressources du Node B, auquel il est couplé par l'interface lub, ont été bloquées.

Un troisième module spécifique est destiné à adapter la synchronisation des différents trafics qui parviennent au niveau du dispositif D et qui sont destinés au Node B auquel il est couplé. Cela permet de compenser les divergences de délais de transmission des trafics issus de la source de trafic et du RNC.

Dans les figures 4 et 5, les flèches matérialisent le trajet physique des données au travers des différentes couches impliquées dans les opérations précitées depuis la source de trafic ST jusqu'à l'équipement d'utilisateur UE, via le dispositif D et le Node B. Par ailleurs, dans ces figures 4 et 5, les couches APP désignent les couches d'application implantées dans la source de trafic TS et dans un équipement d'utilisateur UE.

Equipé des modules spécifiques et des parties précitées des piles de protocoles, le dispositif D peut ainsi se substituer au RNC, de manière à permettre une transmission de trafic (ou transfert de données) entre la source de trafic TS et le Node B auxquels il est couplé.

Le déroulement du transfert de données d'une source de trafic TS vers un Node B peut être, par exemple, le suivant.

Dans une première étape, la source de trafic TS transmet au dispositif D, par exemple via le lien satellite SAT, une demande (ou requête) de transfert de trafic à destination d'un ou plusieurs équipements d'utilisateurs UE situés dans l'une des cellules contrôlées par le Node B auquel il est couplé. A réception de cette demande, le module de contrôle M du dispositif D adresse au Node B une requête de réservation de tout ou partie de ses ressources radio locales.

Dans une seconde étape, le Node B fait le point sur la disponibilité de ses ressources radio, puis adresse au module de contrôle M un message de réponse précisant quelles ressources il peut mettre à disposition de la source de trafic TS. Si cela convient au module de contrôle M, d'une part, il adresse au Node B un message lui signalant que les ressources proposées doivent être bloquées (pour la transmission du trafic), et d'autre part, il adresse au RNC concerné, via l'interface lub, un message lui signalant quelles ressources sont bloquées.

Dans une troisième étape, le module de contrôle M peut éventuellement signaler à la source de trafic TS qu'elle peut transférer son trafic vers le Node B. Cette solution est préférable, mais dans certains types de réseau satellite, il n'est pas envisagé de retour d'information vers le satellite, le trafic du satellite étant directement envoyé au dispositif D sans attendre d'autorisation de sa part. Une fois la transmission de données (ou trafic) terminée, le module de contrôle M adresse, d'une part, un message au Node B pour lui indiquer qu'il peut libérer les ressources radio qui viennent d'être utilisées, et d'autre part, un message au RNC, via l'interface lub, pour lui signaler que les ressources ont été débloquées et qu'il peut de nouveau contrôler la totalité des ressources radio du Node B.

On se réfère maintenant aux figures 6 à 8 pour détailler trois modes de réalisation d'installation selon l'invention.

Le mode de réalisation illustré sur la figure 6 est plus particulièrement dédié à ce que l'homme de l'art appelle le « backhauling » par satellite. Il s'agit de transférer, via un lien satellite, tout le trafic qui circule habituellement par un lien terrestre entre des équipements d'utilisateurs UE et le Core Network CN, via un Node B et un RNC. Le Core Network CN constitue donc, dans cet exemple, la source de trafic TS.

On utilise ici un réseau d'accès satellitaire SAN comportant un serveur de satellite SG (ou « Satellite Gateway ») raccordé au RNC d'accès au Core Network CN, un ou plusieurs terminaux d'émission/réception satellite ST raccordés chacun, de préférence, à un Node B, et au moins un satellite SAT propre à échanger des données par voie d'ondes, sur une fréquence f_{FSS,} avec le serveur de satellite SG et les terminaux de satellite ST. Le lien satellite constitue une interface satellite lubₛ. Par ailleurs, le RNC assure à la fois le service et le contrôle. On parle alors de « controlling et serving RNC ».

Dans l'exemple illustré, chaque Node B est équipé d'un dispositif D selon l'invention, qui filtre l'intégralité des données provenant du terminal de satellite ST. Dans une première variante, comme illustré sur la figure 2, le dispositif pourrait être de type plug and play, et dans ce cas il serait interposé entre le Node B et le terminal de satellite ST correspondant. Dans une seconde variante, le dispositif D pourrait être implanté dans le terminal de satellite ST de façon à pouvoir filtrer les données du lien satellite avant qu'elles ne parviennent au Node B.

Afin de satisfaire aux fortes contraintes de temps réel de l'interface radio UMTS, le module de contrôle M du dispositif D est agencé de manière à prendre en compte le délai introduit par le lien satellite, par rapport au lien terrestre habituellement utilisé dans le réseau UMTS. Les services offerts par le réseau sont habituellement mis en place via le lien terrestre (à faible délai de transmission), et par conséquent, lorsque l'on change les caractéristiques du lien on doit reconfigurer les équipements de sorte que les services soient maintenus sans dégradation de qualité.

Le mode de réalisation illustré sur la figure 7 est plus particulièrement dédié à l'insertion de trafic « externe ». Il s'agit de profiter de l'infrastructure offerte par le réseau UMTS pour transférer, par exemple via un lien satellite, un trafic émanant d'une source de trafic TS externe au Core Network CN, en complément ou à la place du trafic « interne » émanant habituellement du Core Network CN.

Pour ce faire, on utilise également un réseau d'accès satellitaire SAN comportant un serveur de satellite SG (ou « Satellite Gateway ») raccordé à la source de trafic TS, un ou plusieurs terminaux d'émission/réception satellite ST raccordés chacun, de préférence, à un Node B, et au moins un satellite SAT propre à échanger des données par voie d'ondes, sur une fréquence f_{Fss}, avec le serveur de satellite SG et les terminaux de satellite ST. Le lien satellite constitue une interface satellite lubₛ. Par ailleurs, chaque terminal de satellite ST est également raccordé au RNC, couplé au Core Network CN par un lien terrestre lubT, du fait qu'il est raccordé (ou « pluggé ») au Node B. Le raccordement entre le terminal de satellite ST et le Node B est préférentiellement double de manière à séparer le trafic externe provenant de la source de trafic TS du trafic interne provenant du Core Network CN.

Dans l'exemple illustré, chaque Node B est équipé d'un dispositif D selon l'invention, qui filtre l'intégralité des données « externes » provenant du terminal de satellite ST et des données « internes » provenant du RNC. Dans une première variante, comme illustré sur la figure 2, le dispositif pourrait être de type plug and play, et dans ce cas il serait interposé entre le Node B et le terminal de satellite ST correspondant. Dans une seconde variante, le dispositif D pourrait être implanté dans le terminal de satellite ST de façon à pouvoir filtrer les données du lien satellite lubₛ et du lien terrestre lub_{T} avant qu'elles ne parviennent au Node B.

Dans cet exemple, les deux trafics interne et externe doivent soit se partager les ressources radio locales offertes par le Node B, soit en disposer intégralement mais de façon séparée. Or, en raison des différences de synchronisation des canaux de transport utilisés pour les trafics interne et externe, le dispositif D est agencé de manière à configurer les équipements du réseau en fonction de l'origine du trafic, et notamment à synchroniser les canaux de transport.

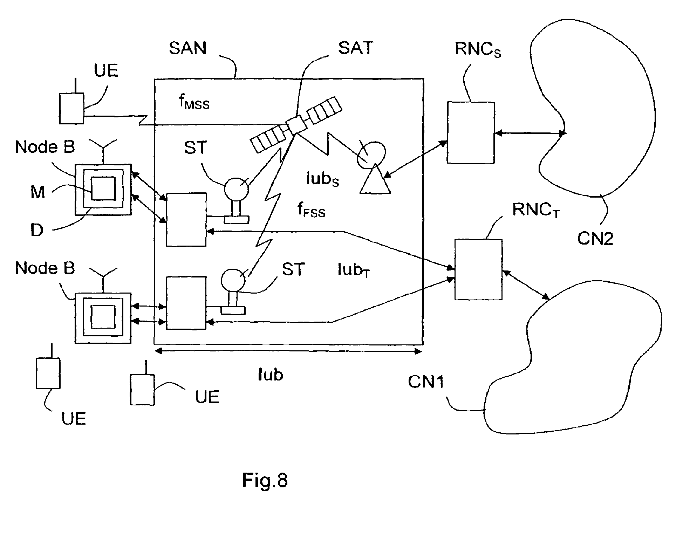

Le mode de réalisation illustré sur la figure 8 est une variante de l'installation de la figure 7. Il est plus particulièrement dédié à l'utilisation des Node Bs en tant que répéteurs terrestres dans une installation de diffusion numérique multimédia par satellite. Il s'agit ici d'utiliser les ressources offertes par les Node Bs d'un réseau UMTS terrestre, comportant un premier Core Network CN1, pour répéter de façon terrestre le trafic d'un réseau satellite, comportant un second Core Network CN2, transmis directement par voie d'ondes, par un satellite SAT aux équipements d'utilisateurs UE.

Pour ce faire, on utilise un réseau d'accès satellitaire SAN comportant un serveur de satellite SG (ou « Satellite Gateway ») raccordé à un second Core Network CN2 (qui constitue une seconde source de trafic) via un RNCₛ, un ou plusieurs terminaux d'émission/réception satellite ST raccordés chacun, de préférence, à un Node B, et au moins un satellite SAT propre à échanger des données par voie d'ondes sur des première et seconde fréquences f_{FSS} et f_{MSS} respectivement avec les terminaux de satellite ST et les équipements d'utilisateurs UEs. Le lien satellite entre le satellite SAT, les terminaux de satellite ST et le serveur de satellite SG constitue une interface satellite lubₛ. Par ailleurs, chaque terminal de satellite ST est également raccordé au RNC_{T}, couplé au Core Network CN, par un lien terrestre lub_{T}. Le raccordement entre le terminal de satellite ST et le Node B est préférentiellement double, de manière à séparer le premier trafic provenant du premier Core Network CN1 du second trafic provenant du second Core Network CN2.

Les seconds trafics (issus respectivement du terminal de satellite ST et du satellite SAT) sont écoulés sur la voie radio UMTS sur des fréquences porteuses séparées. Notamment, le Node B répéteur reçoit du satellite SAT sur la fréquence f_{FSS} le trafic à répéter vers les équipements utilisateurs UEs concernés sur la fréquence f_{MSS}. Le trafic issu du RNC est transmis par le Node B sur une fréquence différente de f_{MSS}.

Dans l'exemple illustré, chaque Node B est équipé d'un dispositif D selon l'invention, qui filtre l'intégralité des données « externes» provenant du terminal de satellite ST sur la fréquence f_{FSS} et des données « internes » provenant du RNC_{T}. Dans une première variante, comme illustré sur la figure 2, le dispositif pourrait être de type plug and play, et dans ce cas il serait interposé entre le Node B et le terminal de satellite ST correspondant. Dans une seconde variante, le dispositif D pourrait être implanté dans le terminal de satellite ST de façon à pouvoir filtrer les données du lien satellite lubₛ et du lien terrestre lub_{T} avant qu'elles ne parviennent au Node B.

Dans cet exemple, les deux trafics interne et externe doivent soit se partager les ressources radio locales offertes par le Node B, soit en disposer intégralement mais de façon séparée. Or, en raison de l'utilisation de deux RNCs différents (RNCₛ et RNC_{T}), il existe des différences de synchronisation des canaux de transport utilisés pour les trafics interne et externe. Le dispositif D est donc agencé de manière à configurer les équipements du réseau en fonction de l'origine du trafic, et notamment à synchroniser les canaux de transport.

Par ailleurs, en raison des traitements différents subis et des trajets différents empruntés par les données externes issues du satellite SAT, sur les fréquences f_{FSS} et f_{MSS}, les mêmes données peuvent parvenir avec un écart temporel au niveau des équipements utilisateurs UEs, ce qui pourrait perturber notablement les services. Pour tenir compte de cet écart, le satellite SAT transmet habituellement au dispositif D son trafic sur la fréquence f_{Fss} avec une avance maximale, par rapport à celui qu'il transmet aux équipements mobiles sur la fréquence f_{MSS}, d'environ 6,5 ms (milliseconde) lorsqu'il est de type géostationnaire et possède une couverture sur l'Europe, et d'environ 2,5 ms lorsqu'il est de type géostationnaire et possède une couverture nationale. Grâce cette avance, il est possible de compenser grossièrement les temps de traitement des données au niveau du Node B.

Cependant, cette avance étant la même pour tous les Node Bs, et ceux-ci ne présentant pas toujours les mêmes caractéristiques et/ou les mêmes zones de couverture, elle ne permet pas en toute circonstance de faire parvenir les données aux équipements d'utilisateurs, par les deux voies, sensiblement simultanément (ou dans une fenêtre temporelle prédéfinie, par exemple, par le 3GPP).

Le module de synchronisation, présenté ci-avant, est destiné à remédier à cet inconvénient. ll est donc agencé de manière à calculer l'écart de transmission qui va permettre aux données qui circulent sur les deux voies de parvenir en un même lieu dans une même fenêtre temporelle. L'écart est calculé, notamment, en fonction de la taille de la zone de couverture du Node B répéteur, ainsi qu'éventuellement de la taille de la zone couverte par le satellite. Une fois l'écart calculé, le dispositif D va retarder, à l'aide de son module de synchronisation, la transmission au Node B des données reçues, d'une valeur sensiblement égale à l'écart calculé.

Grâce à l'invention, il est possible de décentraliser certaines fonctionnalités de gestion des cellules et de leur trafic, et par conséquent d'éviter tout délai supplémentaire introduit par l'insertion dans le réseau d'une source de trafic, éventuellement via un lien satellite.

De plus l'invention permet d'insérer un trafic directement au niveau d'une station de base, telle qu'un Node B, ce qui peut être très utile pour écouler du trafic de diffusion émanant, par exemple, d'un satellite.

En outre, l'invention peut être utilisée pour permettre l'échange de données entre des équipements d'utilisateurs situés dans des cellules gérées par une même station de base.

Enfin, l'invention permet de pouvoir continuer à utiliser une station de base lorsque son lien (terrestre) avec un noeud, de type RNC, est coupé soit pour des raisons techniques, comme par exemple en cas de maintenance ou de défaillance, soit lorsque l'opérateur du réseau souhaite rendre inaccessible son réseau d'accès.

L'invention ne se limite pas aux modes de réalisation d'installations et de dispositifs décrits ci-avant, seulement à titre d'exemple, mais elle englobe toutes les variantes que pourra envisager l'homme de l'art dans le cadre des revendications ci-après.

Ainsi, l'invention a été décrite dans une application aux réseaux dits de 3^{ème} génération (3G), tels que l'UMTS, mais elle s'applique, moyennant les adaptations nécessaires, à d'autres types de réseau, comme par exemple les réseaux de type CDMA 2000 et les réseaux 2G et 2,5G, tels que GSM et GPRS, en particulier lorsque l'opérateur veut isoler une partie de son réseau.

Par ailleurs, l'invention n'est pas limitée aux ressources de type radio. Elle s'applique en effet à d'autres types de ressources, comme par exemple celles de type optique, mécanique (notamment acoustique) ou électrique (analogique).

En outre, l'invention n'est pas limitée à l'utilisation de piles de protocoles dédiés à la gestion des ressources des stations de base. Elle s'applique d'une manière générale à tous moyens permettant de mettre en oeuvre des fonctionnalités similaires ou équivalentes à celles offertes par lesdites piles de protocoles.

## Revendications

1. Dispositif de gestion de données (D) pour une installation de communications comportant au moins une station de base (Node B), disposant de ressources, et au moins un noeud terrestre (RNC), raccordé à un coeur de réseau (CN) et à ladite station de base (Node B) de manière à contrôler ses ressources via une interface (lub), **caractérisé en ce qu'**il comprend des moyens de contrôle (M) propres à être couplés à une source de trafic (TS) et à ladite interface (lub), et agencés de manière à prendre localement le contrôle, sur ordre, d'une partie au moins desdites ressources de la station de base (Node B), à la place dudit noeud (RNC), de manière à permettre un transfert de données entre ladite source de trafic (TS) et ladite station de base (Node B).

2. Dispositif selon la revendication 1, **caractérisé en ce que** lesdits moyens de contrôle (M) comportent une partie au moins de la pile de protocoles dédiés à la gestion desdites ressources, de manière à i) gérer la configuration d'une partie au moins d'au moins une cellule gérée par ladite station de base (Node B), et les ressources associées, ii) contrôler une partie au moins de la configuration des canaux de transport de données gérés par ladite station de base (Node B), iii) gérer des événements « ressource » générés par ladite station de base (Node B) et représentatifs de l'état de ses ressources, et iv) contrôler l'identité des informations de configuration détenues par ladite station de base (Node B) et ledit noeud (RNC).

3. Dispositif selon l'une des revendications 1 et 2, **caractérisé en ce que** lesdits moyens de contrôle (M) comportent une partie au moins de la pile de protocoles dédiés à la gestion de la synchronisation des canaux sous contrôle de ladite station de base (Node B).

4. Dispositif selon l'une des revendications 2 et 3, **caractérisé en ce que** lesdites parties de pile de protocoles dédiés à la gestion desdites ressources et à la synchronisation sont choisies dans un groupe comprenant une partie au moins du protocole NBAP une partie au moins du protocole RRC, une partie au moins du protocole FP, une partie au moins du protocole RLC, une partie au moins du protocole MAC, une partie au moins du protocole PDCP, et une partie au moins du protocole BMC.

5. Dispositif selon l'une des revendications 1 à 4, **caractérisé en ce que** lesdits moyens de contrôle (M) comprennent un module de filtrage agencé de manière à filtrer ledit trafic issu de la source de trafic (TS) et le trafic issu dudit noeud (RNC).

6. Dispositif selon l'une des revendications 1 à 5, **caractérisé en ce que** lesdits moyens de contrôle (M) sont agencés i) à réception d'une requête de transmission de trafic, destiné à au moins un équipement d'utilisateur (UE) situé dans une cellule gérée par ladite station de base (Node B), et issue de ladite source de trafic (TS), pour adresser à ladite station de base (Node B) une requête de réservation de ressources, ii) à réception d'un message de réponse généré par ladîte station de base (Node B), indiquant une disponibilité de ressources, adresser un message audit noeud (RNC) signalant que lesdites ressources disponibles sont bloquées, et iii) une fois que le trafic issu de la source de trafic (TS) est terminé, adresser un premier message à ladite station de base (Node B) pour libérer lesdites ressources utilisées et un second message audit noeud (RNC) pour lui signaler que lesdites ressources sont débloquées.

7. Dispositif selon la revendication 6, **caractérisé en ce que** lesdits moyens de contrôle (M) comprennent un module de génération de messages propre à adresser audit noeud (RNC) lesdits messages signalant que des ressources ont été bloquées.

8. Dispositif selon l'une des revendications 3 à 7, **caractérisé en ce que**, dans une installation comportant des moyens (SAT, SG) propres à transmettre par voie d'ondes, sur des première et seconde fréquences, des données issues de ladite source de trafic (TS, CN2), respectivement à des équipements d'utilisateurs (UE), situés dans une cellule gérée par ladite station de base (Node B), et à ladite station de base (Node B), lesdits moyens de contrôle (M) sont agencés pour calculer un écart de transmission, représentatif de la différence temporelle des durées de transmission desdites données suivant les première et seconde fréquences, et retarder les données reçues et à transmettre à ladite station de base (Node B) d'une valeur sensiblement égale audit écart calculé.

9. Dispositif selon la revendication 8, **caractérisé en ce que** ledit écart est fonction des dimensions de la zone de couverture desdits moyens de transmission par voie d'ondes (SAT) et/ou de ladite station de base (Node B).

10. Dispositif selon l'une des revendications 8 et 9, **caractérisé en ce que** lesdits moyens de contrôle (M) comprennent un module d'adaptation de la synchronisation agencé de manière à calculer lesdits écarts de transmission entre des trafics issus de la source de trafic (TS) et du noeud (RNC).

11. Dispositif selon l'une des revendications 1 à 10, **caractérisé en ce qu'**il comporte un boîtier muni d'une interface de connexion.

12. Dispositif selon la revendication 11, **caractérisé en ce que** ledit boîtier est propre à être raccordé, via ladite interface de connexion, à ladite station de base (Node B).

13. Dispositif selon la revendication 11, **caractérisé en ce que** ledit boîtier est propre à être raccordé, via ladite interface de connexion, à un terminal de satellite (ST) couplé à ladite station de base (Node B) et à un satellite (SAT) alimenté par ladite source de trafic (TS, CN2).

14. Dispositif selon l'une des revendications 1 à 11, **caractérisé en ce qu'**il est propre à être implanté dans ladite station de base (Node B).

15. Dispositif selon l'une des revendications 1 à 11, **caractérisé en ce qu'**il est propre à être implanté dans un terminal de satellite (ST) couplé a ladite station de base (Node B) et à un satellite (SAT) alimenté par ladite source de trafic (TS,CN2).

16. Installation de communications comportant au moins une station de base (Node B), disposant de ressources, et au moins un noeud terrestre (RNC), raccordé à un premier coeur de réseau (CN,CN1) et à ladite station de base (Node B) de manière à contrôler ses ressources via une interface (lub), **caractérisée en ce qu'**elle comprend un dispositif (D) selon l'une des revendications précédentes.

17. Installation selon la revendication 16, **caractérisée en ce qu'**elle comprend un réseau d'accès satellitaire (SAN).

18. Installation selon la revendication 17, **caractérisée en ce que** ledit réseau d'accès satellitaire (SAN) comprend au moins un serveur de satellite (SG) raccordé audit noeud (RNC), au moins un terminal de satellite (ST) raccordé à l'une desdites stations de base (Node B), et au moins un satellite de communications (SAT) propre à échanger des données par voie d'ondes avec ledit serveur de satellite (SG) et avec ledit terminal de satellite (ST), ledit noeud (RNC) constituant avec le coeur de réseau (CN) ladite source de trafic (TS).

19. Instillation selon la revendication 17, **caractérisée en ce que** ledit réseau d'accès satellitaire (SAN) comprend au moins un serveur de satellite (SG) raccordé à une source de trafic (TS), au moins un terminal de satellite (ST) raccordé à l'une desdites stations de base (Node B) et audit noeud (RNC), et au moins un satellite de communications (SAT) propre à échanger des données par voie d'ondes avec ledit serveur de satellite (SG) et avec ledit terminal de satellite (ST).

20. Installation selon la revendication 17, **caractérisée en ce que** ledit réseau d'accès satellitaire (SAN) comprend au moins un serveur de satellite (SG) raccordé à un noeud satellitaire (RNC_{S}), raccordé à un second coeur de réseau (CN2) et constituant avec celui-ci ladite source de trafic (TS), au moins un terminal de satellite (ST) raccordé à l'une desdites stations de base (Node B) et audit noeud (RNC_{T}), et au moins un satellite de communications (SAT) propre à échanger des données par voie d'ondes avec ledit serveur de satellite (SG), avec ledit terminal de satellite (ST) et avec dés équipements d'utilisateurs (UE), aptes à échanger des données avec ladite station de base (Node B), via lesdites ressources.

21. Utilisation des dispositif et installation selon l'une des revendications précédentes dans les réseaux de communications de type UMTS, chaque noeud étant un contrôleur de réseau radio (RNC) et chaque station de base étant un Node B.

## Claims

1. A data management device (D) for a communication installation including at least one base station (Node B) having resources and at least one terrestrial node (RNC) connected to a core network (CN) and to said base station (Node B) to control its resources via an interface (lub), **characterised in that** said device includes control means (M) adapted to be coupled to a traffic source (TS) and to said interface (lub) and adapted to take local control, on command, of at least a portion of said resources of the base station (Node B), instead of said node (RNC), to enable transfer of data between said traffic source (TS) and said base station (Node B).

2. The device claimed in claim 1, wherein said control means (M) include at least a portion of the stack of protocols dedicated to management of said resources so as to i) manage the configuration of at least one portion of at least one cell managed by said base station (Node B) and the associated resources, ii) control at least one portion of the configuration of the data transport channels managed by said base station (Node B), iii) manage "resource" events generated by said base station (Node B) and representative of the status of its resources, and iv) check that identical configuration information is held by said base station (Node B) and said node (RNC).

3. The device claimed in one of claims 1 and 2, wherein said control means (M) include at least one portion of the stack of protocols dedicated to managing synchronization of channels under the control of said base station (Node B).

4. The device claimed in one of claims 2 and 3, wherein said portions of the stack of protocols dedicated to management of said resources and synchronization are chosen from a group comprising at least a portion of the Node B Application Part (NBAP) protocol, at least a portion of the Radio Resource Control (RRC) protocol, atleast a portion of the Frame Protocol (FP), at least a portion of the Radio Link Control (RLC) protocol, at least a portion of the Medium Access Control (MAC) protocol, at least a portion of the Packet Data Convergence Protocol (PDCP), and at least a portion of the Broadcast/Multicast Control (BMC) protocol,

5. The device claimed in one of claims 1 to 4, wherein said control means (M) include a filter module adapted to filter said traffic from said traffic source (TS) and the traffic from said node (RNC).

6. The device claimed in one of claims 1 to 5, wherein said control means (M) are adapted i) to send said base station (Node B) a resource reservation request on receipt of a request to transmit traffic, to at least one user equipment (UE) situated in a cell managed by said base station (Node B) and coming from said traffic source (TS), ii) to send said node (RNC) a message indicating that said available resources are blocked on receipt of a response message generated by said base station (Node B) indicating availability of resources, and iii) to send a first message to said base station (Node B) to release said resources that have been used and a second message to said node (RNC) to tell it that said resources have been unblocked when the traffic from the traffic source (TS) is finished.

7. The device claimed in claim 6, wherein said control means (M) include a message generator module adapted to send said node (RNC) said messages indicating that resources have been blocked.

8. The device claimed in one of claims 3 to 7 wherein, in an installation including means (SAT, SG) adapted to transmit data from said traffic source (TS, CN2) by radio, at first and second frequencies, respectively to user equipments (UE) situated in a cell managed by said base station (Node B) and to said base station (Node B), said control means (M) are adapted to calculate a transmission difference representative of the difference between the transmission times of said data at said first and second frequencies and to delay the data received and to be transmitted to said base station (Node B) by an amount substantially equal to said calculated difference.

9. The device claimed in claim 8, wherein said difference is a function of the dimensions of the coverage area of said satellite transmission means (SAT) and/or said base station (Node B).

10. The device claimed in one of claims 8 and 9, wherein said control means (M) include a synchronization adaptor module adapted to calculate said transmission time differences between traffic from said traffic source (TS) and from the node (RNC).

11. The device claimed in one of claims 1 to 10 further including a module provided with a connection interface.

12. The device claimed in claim 11, wherein said module is adapted to be connected to said base station (Node B) via said connection interface.

13. The device claimed in claim 11, wherein said module is adapted to be connected via said connection interface to a satellite terminal (ST) coupled to said base station (Node B) and to a satellite (SAT) supplied by said traffic source (TS, CN2).

14. The device claimed in one of claims 1 to 11, adapted to be installed in said base station (Node B).

15. The device claimed in one of claims 1 to 11, adapted to be installed in a satellite terminal (ST) coupled to said base station (Node B) and to a satellite (SAT) supplied by said traffic source (TS, CN2).

16. A communication installation including at least one base station (Node B) having resources and at least one terrestrial node (RNC) connected to a first core network (CN, CN1) and to said base station (Node B) to control its resources via an interface (lub), which installation includes a device (D) as claimed in any one of the preceding claims.

17. The installation claimed in claim 16, further including a satellite access network (SAN).

18. The installation claimed in claim 17, wherein said satellite access network (SAN) includes at least one satellite gateway (SG) connected to said node (RNC), at least one satellite terminal (ST) connected to one of said base stations (Node B), and at least one communication satellite (SAT) adapted to exchange data by radio with said satellite gateway (SG) and with said satellite terminal (ST), said node (RNC) and said core network (CN) together constituting said traffic source (TS).

19. The installation claimed in claim 17, wherein said satellite access network (SAN) includes at least one satellite gateway (SG) connected to a traffic source (TS), at least one satellite terminal (ST) connected to one of said base stations (Node B) and to said node (RNC), and at least one communication satellite (SAT) adapted to exchange data by radio with said satellite gateway (SG) and with said satellite terminal (ST).

20. The installation claimed in claim 17, wherein said satellite access network (SAN) includes at least one satellite gateway (SG) connected to a satellite node (RNC_{S}) connected to a second core network (CN2) and together therewith constituting said traffic source (TS), at least one satellite terminal (ST) connected to one of said base stations (Node B) and to said node (RNC_{T}), and at least one communication satellite (SAT) adapted to exchange data by radio with said satellite gateway (SG), with said satellite terminal (ST), and with user equipments (UE) adapted to exchange data with said base station (Node B) via said resources.

21. Use of a device and an installation as claimed in one of the preceding claims in UMTS communication networks, each node being a radio network controller (RNC) and each base station being a Node B.

## Patentansprüche

1. Vorrichtung zur Verwaltung von Daten (D) für eine Kommunikationsanlage mit mindestens einer Basisstation (Knoten B), welche über Ressourcen verfügt, und mindestens einem terrestrischen Knoten (RNC), welchen an einen Netzwerkkern (CN) und an die besagte Basisstation (Node B) angeschlossen ist, um die Ressourcen über eine Schnittstelle (lub) zu steuern, **dadurch gekennzeichnet, dass** sie Steuermittel (M) umfasst, welche an eine Verkehrsquelle (TS) und an die besagte Schnittstellte (lub) gekoppelt werden können und dazu ausgelegt sind, auf Befehl lokal die Steuerung mindestens eines Teils der besagten Ressourcen der Basisstation (Node B) anstelle des besagten Knotens (RNC) zu übernehmen, um die Übertragung von Daten zwischen der besagten Verkehrsquelle (TS) und der besagten Basisstation (Node B) zu ermöglichen.

2. Vorrichtung nach Anspruch 1, **dadurch gekennzeichnet, dass** die besagten Steuermittel (M) zumindest einen Teil des Stapels von Protokollen, welche für die Verwaltung der besagten Resourcen bestimmt sind, umfassen, um i) die Konfiguration zumindest eines Teils einer von der besagten Basisstation (Node B) verwalteten Zelle und die zugehörigen Resourcen zu verwalten ii) zumindest einen Teil der Konfiguration der von der besagten Basisstation (Node B) verwalteten Dstentransportkanäle zu steuern, iii) die von der besagten Basisstation (Node B) erzeugten "Ressourcen"-Ereignisse, welche für den Zustand ihrer Resourcen repräsentativ sind, zu verwalten, und iv) die Identität der von der besagten Basisstation (Node B) und dem besagten Knoten (RNC) gehaltenen Konfigurationsiformationen zu steuern.

3. Vorrichtung nach einem der Ansprüche 1 und 2, **dadurch gekennzeichnet, dass** die besagten Steuermittel (M) zumindest einen Teil des Stapels von Protokollen, welche für die Verwaltung der Synchronisation der von der besagten Basisstation (Node B) gesteuerten Kanäle bestimmt sind, umfassen.

4. Vorrichtung nach einem der Ansprüche 2 und 3, **dadurch gekennzeichnet, dass** die besagten Teile des Stapels von Protokollen, welche für die Verwaltung der besagten Ressourcen und der Synchronisation bestimmt sind, in einer Gruppe bestehend aus zumindest einem Teil des NBAP-Protokolls, zumindest einem Teil des RRC-Protokolls, zumindest einem Teil des FP-Protokolls, zumindest einem Teil des RLC-Protokolls, zumindest einem Teil des MAC-Protokolls, zumindest einem Teil des PDCP-Protokolls und zumindest einem Teil des BMC-Protokolls gewählt werden.

5. Vorrichtung nach einem der Ansprüche 1 bis 4, **dadurch gekennzeichnet, dass** die besagten Steuermittel (M) ein Filtermodul umfassen, welches dazu ausgelegt ist, den besagten von der Verkehrsquelle (TS) kommenden Verkehr und den von dem besagten Knoten (RNC) kommenden Verkehr zu filtern.

6. Vorrichtung nach einem der Ansprüche 1 bis 5, **dadurch gekennzeichnet, dass** die besagten Steuermittel (M) dazu ausgelegt sind, i) bei Empfang einer von der besagten Verkehrsquelle (TS) ausgegebenen Anforderung für die Übertragung eines für mindestens ein Benutzergerät (UE), welches sich in einer von der besagten Basisstation (Node B) verwalteten Zelle befindet, bestimmten Verkehrs eine Anforderung für die Reservierung von Ressourcen an die besagte Basisstation (Node B) zu senden, ii) bei Empfang einer von der besagten Basisstation (Node B) erzeugten Antwortnachricht, welche eine Verfügbarkeit von Ressourcen meldet, eine Nachricht an den besagten Knoten (RNC) zu senden, welche meldet, dass die besagten verfügbaren Ressourcen blockiert wurden, und iii) wenn der von der Verkehrsquelle (TS) kommende Verkehr beendet ist, eine erste Nachricht an die besagte Basisstation (Node B) zu senden, um die besagten benutzten Ressourcen freizugeben, und eine zweite Nachricht an den besagten Knoten (RNC) zu senden, um ihm zu melden, dass die besagten Ressourcen freigegeben wurden.

7. Vorrichtung nach Anspruch 6, **dadurch gekennzeichnet, dass** die besagten Steuermittel (M) ein Nachrichtenerzeugungsmodul umfassen, welches dazu bestimmt ist, die besagten Nachrichten, welche das Blockieren der Ressourcen melden, an den besagten Knoten (RNC) zu senden.

8. Vorrichtung nach einem der Ansprüche 3 bis 7, **dadurch gekennzeichnet, dass** in einer Anlage, welche Mittel (SAT, SG) umfasst, die dazu bestimmt sind, über Wellen auf einer ersten und einer zweiten Frequenz von der besagten Verkehrsquelle (TS, CN2) kommende Daten jeweils an sich in einer von der besagten Basisstation (Node B) verwalteten Zelle befindliche Benutzergeräte (UE) und an die besagte Bssisstation (Node B) zu übertragen, die besagten Steuermittel (M) dazu ausgelegt sind, einen Übertragungsabstand, welcher für die zeitliche Differenz der Übertragungszeiton der besagten Daten gemäß der ersten und der zweiten Frequenz repräsentativ ist, zu kalkulieren und die empfangenen und an die besagte Basisstation (Node B) zu übertragenden Daten um einen Wert, welcher annähernd dem besagten kalkulierten Abstand entspricht, zu verzögern.

9. Vorrichtung nach Anspruch 8, **dadurch gekennzeichnet, dass** der besagte Abstand von der Größe des Abdeckungsbereichs der besagten Mittel für die Übertragung über Wellen (SAT) und/oder der besagten Basisstation (Node B) abhängt.

10. Vorrichtung nach einem der Ansprüche 8 und 9, **dadurch gekennzeichnet, dass** die besagten Steuermittel (M) ein Synchronisationsanpassungsmittel umfassen, welches dazu ausgelegt ist, die besagten Übertragungsabstände zwischen von der Verkehrsquelle (TS) kommendem Verkehr und vom Knoten (RNC) kommendem Verkehr zu kalkulieren.

11. Vorrichtung nach einem der Ansprüche 1 bis 10, **dadurch gekennzeichnet, dass** sie ein mit einer Verbindungsschnittstelle versehenes Gehäuse umfasst.

12. Vorrichtung nach Anspruch 11, **dadurch gekennzeichnet, dass** das besagte Gehäuse dazu bestimmt ist, über die besagte Verbindungsschnittstelle an die besagte Basisstation (Node B) angeschlossen zu werden.

13. Vorrichtung nach Anspruch 11, **dadurch gekennzeichnet, dass** das besagte Gehäuse dazu bestimmt ist, über die besagte Verbindungsschnittstellean an ein Satellitenendgerät (ST), welches an die besagte Basisstation (Node B) gekoppelt ist, und an einen Satelliten (SAT), welcher von der besagten Verkehrsquelle (TS, CN2) versorgt wird, angeschlossen zu werden.

14. Vorrichtung nach einem der Ansprüche 1 bis 11, **dadurch gekennzeichnet, dass** sie dazu bestimmt ist, in die besagte Basisstation (Node B) integriert zu werden.

15. Vorrichtung nach einem der Ansprüche 1 bis 11, **dadurch gekennzeichnet, dass** sie dazu bestimmt ist, in das Satellitenendgerät (ST), welches an die besagte Basisstation (Node B) und an einen von der besagten Verkehrsquelle (TS, CN2) versorgten Satelliten (SAT) gekoppelt ist, integriert zu werden.

16. Kormnunikationsanlage mit mindestens einer Basisstation (Node B), welche über Ressourcen verfügt, und mindestens einem terrestrischen Knoten (RNC), welcher an einen ersten Netzwerkkern (CN,CN1) und an die besagte Basisstation (Node B) angeschlossen ist, um deren Ressourcen über eine Schnittstelle (lub) zu steuern, **dadurch gekennzeichnet, dass** sie eine Vorrichtung (D) gemäß einem der vorstehenden Ansprüche umfasst.

17. Anlage nach Anspruch 16, **dadurch gekennzeichnet, dass** sie ein satellitengestütztes Zugangsnetz (SAN) umfasst.

18. Anlage nach Anspruch 17, **dadurch gekennzeichnet, dass** das besagte satellitengestützte Zugangsnetz (SAN) mindestens einen Satellitenserver (SG), welcher an den besagten Knoten (RNC) angeschlossen ist, mindestens ein Satellitenendgerät (ST), welches an eine der besagten Basisstationen (Node B) angeschlossen ist, und mindestens einen Kommunikationssatelliten (SAT), welcher dazu bestimmt ist, über Wellen Daten mit dem besagten Satellitenserver (SG) und mit dem besagten Satellitenendgerät (ST) auszutauschen, umfasst, wobei der besagte Knoten (RNC) mit dem Netzwerkkern (CN) die besagte Verkehrsquelle (TS) bildet.

19. Anlage nach Anspruch 17, **dadurch gekennzeichnet, dass** das besagte satellitengestützte Zugangsnetz (SAN) mindestens einen Satellitenserver (SG), welcher an eine Verkehrsquelle (TS) angeschlossen ist, mindestens ein Satellitenendgerät (ST), welches an eine der besagten Basisstationen (Node B) und an den besagten Knoten (RNC) angeschlossen ist, und mindestens einen Kommunikationssatelliten (SAT), welcher dazu bestimmt ist, über Wellen Daten mit dem besagten Satellitenserver (SG) und dem besagten Satellitenendgerät (ST) auszutauschen, umfasst.

20. Anlage nach Anspruch 17, **dadurch gekennzeichnet, dass** das besagte satellitengesttützte Zugangsnetz (SAN) mindestens einen Satellitenserver (SG), welcher an einen satellitengestützten Knoten (RNC_{S}) angeschlossen ist, welcher seinerseits an einen zweiten Netzwerkkern (CN2) angeschlossen ist und mit diesem die besagte Verkehrsquelle (TS) bildet, mindestens ein Satellitenendgerät (ST), welches an eine der besagten Basisstationen (Node B) und an den besagten Knoten (RNC_{T}) angeschlossen ist, und mindestens einen Kommunikationssatelliten (SAT), welcher dazu bestimmt ist, über Wellen Daten mit dem besagten Satellitenserver (SG), mit dem besagten Satellitenendgerät (ST) und mit Benutzergeräten (UE), welche für den Austausch von Daten mit der besagten Basisstation (Node B) über die besagten Ressourcen bestimmt sind, auszutauschen, umfasst.

21. Verwenden der Einrichtung und der Anlage nach einem der vorstehenden Ansprüche in den Kommunikationsnotzwerken vom Typ UMTS, wobei jeder Knoten eine Funknetzwerk-Steuereinrichtung (RNC) und jede Basisstation ein Node B ist.
